# EUROPEAN PATENT APPLICATION

(11) **EP 2 853 515 A1**
(43) Date of publication of application: **01.04.2015**
(21) Application number: 13185872.2
(22) Date of filing: 25.09.2013
(51) Int. Cl.: C02F 1/26, C02F 1/44, C02F 1/04, C02F 1/20, C02F 1/28, C02F 9/00, C10G 21/28, C10G 17/10

(54) **A system and process for water treatment**

(71) Applicant: Sulzer Chemtech AG, 8404 Winterthur (CH)
(72) Inventor: Herguijuela, Juan Dr., 79424 Auggen (DE); Koch, Jörg Dr., 79400 Kandern (DE); Maus, Eva, 4055 Basel (CH)
(74) Representative: Manitz, Finsterwald & Partner GbR

(57) **Abstract**

A system S1 for water treatment is disclosed which comprises a membrane separation unit M1, an extraction unit E1, a decanting unit D1, an organic phase recovery unit O1 a waste water post-processing unit W1, wherein either: (i) a first inlet E100 of the extraction unit E1 is in fluid communication with a first system inlet S100, and a first outlet W200 of the waste water post-processing unit W1 is in fluid communication with a first inlet M100 of the membrane separation unit M1, OR (ii) the first inlet M100 of the membrane separation unit M1 is in fluid communication with the first system inlet S100 and optionally also the first outlet W200 of the waste water post-processing unit W1. The present invention also relates to a process for the water treatment of a feed stream 100 comprising an organic component and an aqueous component to form a recovered organic product 200 and a purified waste water 300, preferably using said system. [FIG. 1]

## Description

### BACKGROUND OF THE INVENTION

The present invention relates to a system for water treatment. The present invention also relates to a process for the water treatment of a feed stream comprising an organic component and an aqueous component.

Many industrially important processes result in the production of streams of organic compounds, such as organic acids like acetic acid, in dilute concentrations. Economic considerations and environmental concerns lead to the desirability of recovering organic acids from such streams for reuse, for sale, or for disposal in the most economic manner.

The separation of acetic acid and other high boilers from water may often be performed by a membrane process, such as reverse osmosis. This unit operation can produce purified water but cannot recover the high boiler, in this case acetic acid as a pure substance. It always ends up as a concentrate containing about 12 - 15 wt. % high boiler. This concentrate can further be treated by a combination of liquid-liquid-extraction and distillation. Such a process is state of the art and described in literature. For acetic acid concentration in the feed < 40%, this process is more efficient than direct distillation or entrainer distillation.

Organic acids in dilute aqueous streams may often be economically removed and recovered through the use of a liquid-liquid extraction process employing a solvent, typically one that is high boiling. When the organic acids make up a very low percentage by weight of the stream to be treated, it becomes difficult to recover the acids economically by such a liquid-liquid extraction process, although environmental considerations often make it necessary to treat such streams nonetheless.

In particular, for low acetic acid concentrations in the feed stream (e.g. << 10 wt. %) a high amount of water must be processed and this leads to high flow rates and thus large equipment. In addition, the final acetic acid concentration to be reached in the raffinate of the extraction step determines the solvent flow rate to the extraction step. With a given specification of acetic acid in the final effluent, the solvent rate is fixed and this then defines the size of the solvent recovery system. If the feed flow rate needs to be increased while the acetic acid specification should remain constant, then the solvent flow rate must be increased accordingly to keep the same solvent ratio in the extraction step. In this case often, the solvent recovery is the bottleneck of the system because it cannot handle this higher solvent flow.

US 5,624,566 allegedly discloses a solution to this problem in which a dilute C1 - C7 carboxylic acid aqueous stream (less than 10 wt %) is subject to an initial treatment step of a membrane separation to produce a more concentrated carboxylic acid intermediate stream having an acid concentration which is higher than the starting concentration. Then that intermediate stream is subjected to a further separation process of liquid-liquid extraction, to produce an extract, which is in turn distilled to recover a purified and concentrated carboxylic acid product stream. Nonetheless, the process of US '566 has disadvantages with respect to optimizing the solvent rate in the extraction step because the membranes are only used to initially treat the feed stream and increase the acid concentration in the stream entering the extraction step. In addition, if the aqueous acid stream contains other organic components, in particular low boiling components which can corrode the membrane material, either a special membrane must be applied, or the process presented in US '566 is not applicable. It would furthermore be desirable to be able to operate such water treatment systems and processes over a broader composition and concentration range than in US '566.

In conclusion, it would be desirable to have an improved system and process for water treatment. Particularly desirable would be a system and process for effective water treatment to remove and purify a higher-boiling organic component present over a variety of concentration ranges. Also particularly desirable would also be a system and process in which the sensitivity of the membranes, such as reverse-osmosis membranes, to commonly used extraction solvents is alleviated. Also desirable would be to additionally reduce the operational expenditure (OPEX) of the system and process, and to be able to readily debottleneck existing processes.

### SUMMARY OF THE INVENTION

Starting from this state of the art, it is the main object of the invention to provide an improved system and process for water treatment. Further objects of the invention may include providing a system for effective water treatment to remove and purify a higher-boiling organic component present over a variety of concentration ranges, providing a system and process in which the sensitivity of membranes, particularly reverse-osmosis membranes, to commonly used extraction solvents is alleviated, and reducing the operational expenditure (OPEX) of the process and/or debottlenecking existing processes.

According to the invention, these objects are achieved firstly by a system for water treatment comprising:
- a first system inlet suitable for feeding a first feed stream comprising an organic component and an aqueous component, a first system outlet suitable for discharging a first stream comprising predominantly an aqueous component, and a second system outlet for discharging a second stream comprising predominantly an organic component,
- a membrane separation unit suitable for separating an aqueous-organic retentate from an aqueous permeate, having a first inlet and first and second outlets,
- an extraction unit suitable for separating an organic extract from an aqueous raffinate, having first and second inlets and first and second outlets,
wherein the system also comprises:
- a decanting unit suitable for separating an organic solvent phase from an aqueous phase having a different density than the organic phase, having a first inlet and first and second outlets,
- an organic phase recovery unit, suitable for recovering an organic product stream from a second feed stream comprising predominantly an organic component and a minority of an aqueous component, having a first inlet and first and second outlets,
- a waste water post-processing unit, suitable for processing a waste water stream to remove an organic component from the waste water stream comprising predominantly an aqueous component and a minority of an organic component, having a first inlet and first and second outlets,
wherein the first outlet of the extraction unit is in fluid communication with the first inlet of the organic phase recovery unit, and the second outlet of the extraction unit is in fluid communication with the first inlet of the waste water post-processing unit,
wherein the second outlet of the organic phase recovery unit is in fluid communication with the second outlet of the system, and the first outlet of the organic phase recovery unit is in fluid communication with the first inlet of the decanting unit,
wherein the second outlet of the waste water post-processing unit is in fluid communication with the first inlet of the decanting unit,
wherein the second outlet of the membrane separation unit is in fluid communication with the first inlet of the extraction unit, and the first outlet of the membrane separation unit is in fluid communication with the first system outlet,
wherein the first outlet of the decanting unit is in fluid communication with the first inlet of the waste water post-processing unit, the second outlet of decanting unit in fluid communication with the second inlet of the extraction unit, and wherein either:
(i) the first inlet of the extraction unit is in fluid communication with the first system inlet, and the first outlet of the waste water post-processing unit is in fluid communication with the first inlet of the membrane separation unit,
   or
(ii) the first inlet of the membrane separation unit is in fluid communication with the first system inlet and optionally also the first outlet of the waste water post-processing unit.

The inventors have found also that including a membrane separation unit in the system of the invention allows a higher boiling organic compound such as an organic acid to be separated from water, and the feed stream can be concentrated from much less that 10 wt% organic compound to at least approximately 12-15 wt%. This concentration then will reduce the feed flow rate to the extraction unit (e.g. an extraction column). With such a lower feed rate less solvent is required, too, and thus the extraction as well as subsequent distillation equipment can be significantly smaller. This will reduce the capital expenditure (CAPEX) for the installation; and in addition the overall lower flow rates will reduce OPEX and increase the overall economics of the process.

By placing the membrane after the waste water post-processing unit (e.g. a raffinate stripper), the final high boiling organic compound (e.g. organic acid) concentration in the purified waste water no longer depends on the extraction step. The permeate of the membrane separation unit will be purified water while the retentate contains up to 12-15 wt% high boiling organic compound. By this the organic compound concentration in the raffinate stream leaving the extraction unit can be higher than that allowed by the specification of the final waste water, which thus allows for a reduced solvent ratio in the extraction unit and using smaller equipment in the extraction unit. However after the membrane separation unit in the system and process of the invention, the final specified purity can still nonetheless be achieved.

Compared to the system and process disclosed in US 5,624,566 B2, the system and process of the present invention is applicable to the recovery of a broader variety of organic compounds in a larger range of concentrations. For example, the system and process of US '566 is disclosed to be applicable only to the recovery of C1 to C7 carboxylic acids in dilute aqueous solutions of less than 10 wt % in concentration. The present invention also allows for a substantial optimization of the extraction unit, in particular the solvent ratio and equipment size.

According to the invention, these objects are achieved secondly by a process for the water treatment of a feed stream comprising an organic component and an aqueous component to form a recovered organic product and a purified waste water,
wherein the process comprises the steps of:
- extraction to form an organic extract and an aqueous raffinate;
- organic phase recovery to recover an organic phase from the organic extract by removing an aqueous phase byproduct, wherein the organic phase is discharged as a recovered organic product from the process;
- waste water post processing to strip a volatile component from an aqueous phase and an aqueous raffinate and form a waste water;
- membrane separation into an aqueous-organic permeate, which is discharged as a purified waste water, and an organic retentate;
- decanting to form an organic solvent phase and the aqueous phase from the volatile component and the aqueous phase byproduct;
wherein either:
(i) the extraction is of the feed stream, the organic solvent phase and the organic retentate, and the membrane separation is of the waste water,
   or
(ii) the extraction is of the organic solvent phase and the organic retentate, and the membrane separation is of the feed stream and optionally the waste water.

A further object is to provide a system and process in which the sensitivity of membranes, particularly reverse-osmosis (RO) membranes, to commonly used extraction solvents is alleviated. For example, RO membranes are known to be sensitive to the commonly used solvents in extraction like esters, ketones or ethers. Therefore the waste water post-processing unit, e.g. a stripping column, in the claimed invention is located preferably upstream of the membrane separation and it functions to remove traces of solvent from the aqueous raffinate stream to keep the membrane step virtually free from said solvents.

A still further object is to provide a system and process which has a reduced operational expenditure (OPEX) and/or allows existing processes to be debottlenecked. First of all, locating the separation unit after the waste water post-procesing unit (e.g. a stripping column) allows the solvent ratio in the extraction unit (e.g. an extraction column) to be reduced significantly. The reduction of the solvent ratio then allows the OPEX of the process to be reduced or an existing process to be debottlenecked.

In one embodiment of the system and in one embodiment of the process of the invention, the membrane separation is carried out by means of a membrane separation unit which is a micro-, nano-, or preferably an ultra-filtration pressure-driven membrane separation unit, or a reverse osmosis membrane separation unit, most preferably a reverse osmosis membrane separation unit. Thus in these embodiments, the membrane separation unit may simply be a pressure-driven membrane system, preferably an ultra-fitration pressure driven one so as to have a lower trans-membrane pressure, or most preferably a reverse osmosis one so that the system may readily achieve the highest concentrations, e.g. of about 12 - 15 % high-boiling organic compound, such as an organic acid.

In another embodiment of the system and process, the extraction is carried out by means of an extraction unit which is a mixer settler, preferably an extraction column, or a combination of said mixer-settler and said extraction column. Extraction columns typically have better performance and flexibility in separation when used in the system or process of the invention.

In still another embodiment of the system and process, the waste water post processing is carried out by means of a waste water post-processing unit, wherein the waste water post-processing unit is an adsorption unit based on activated carbon, preferably a waste water stripper, or a combination of said adsorption unit and said waste water stripper. The use of a waste water stripper has the advantage of providing the most reliable design in terms of removing the remaining organic impurity from the waste water stream.

In yet another embodiment of the system and process, the decanting is carried by means of a decanting unit, wherein the decanting unit is a gravity settler either having internals embodied so as to promote droplet-droplet coalescence and improve phase separation or preferably without said internals. A gravity settler without internals provides the least expensive, easiest to operate, and simplest design. However internals to promote droplet-droplet coalescence advantageously promote phase separation. Examples of such internals include Mellachevron, DC-coalescer, and other static or dynamic internals to promote droplet coalescence. Such internals typically comprise a set of parallel plates or metal sheets that are either flat or corrugated, and in which the separation process is enhanced by reducing the droplet settling distance.

In still another embodiment of the system and process, the organic phase recovery is carried out by means of an organic phase recovery unit, wherein the organic phase recovery unit is an evaporation, distillation, pervaporation, vapour permeation, or extraction unit, preferably rectification unit, or their combination. A rectification unit will often be preferred due to its provision of the best separation performance combined with high energy efficiency.

One skilled in the art will understand that the combination of the subject matters of the various claims and embodiments of the invention is possible without limitation in the invention to the extent that such combinations are technically feasible. In this combination, the subject matter of any one claim may be combined with the subject matter of one or more of the other claims. In this combination of subject matters, the subject matter of any one system claim may be combined with the subject matter of one or more other system claims or the subject matter of one or more process claims or the subject matter of a mixture of one or more system claims and process claims. By analogy, the subject matter of any one process claim may be combined with the subject matter of one or more other process claims or the subject matter of one or more system claims or the subject matter of a mixture of one or more system claims and process claims. By way of example, the subject matter of any one claim may be combined with the subject matters of any number of the other claims without limitation to the extent that such combinations are technically feasible.

One skilled in the art will understand that the combination of the subject matters of the various embodiments of the invention is possible without limitation in the invention. For example, the subject matter of one of the above-mentioned system embodiments may be combined with the subject matter of one or more of the other above-mentioned system or process embodiments or vice versa without limitation so long as technically feasible.

### BRIEF DESCRIPTION OF THE DRAWINGS

The invention will be explained in more detail hereinafter with reference to various embodiments of the invention as well as to the drawings. The schematic drawings show:
- Fig. 1: shows a schematic view of an embodiment of a system in which an inlet of an extraction unit is in fluid communication with a system inlet, and an outlet of a waste water post-processing unit is in fluid communication with an inlet of a membrane separation unit.
- Fig. 2: shows a schematic view of an embodiment of a system in which the first inlet of the membrane separation unit is in fluid communication with the first system inlet and the first outlet of the waste water post-processing unit.
- Fig. 3: shows a schematic view of an embodiment of a system in which the first inlet of the membrane separation unit is in fluid communication with the first system inlet but not the first outlet of the waste water post-processing unit.
- Fig. 4: shows a schematic view of an embodiment of a process corresponding to the system of Fig. 1.
- Fig. 5: shows a schematic view of an embodiment of a process corresponding to the system of either Fig. 2 or Fig. 3.
- Fig. 6: shows a comparison of the performance of (a) an extraction unit in a system and process of the invention versus (b) a comparative extraction unit lacking the other units of the system of the invention

### DETAILED DESCRIPTION OF THE INVENTION

### DEFINITIONS

As used in the specification and claims of this application, the following definitions, should be applied:

"a", "an", and "the" as an antecedent may refer to either the singular or plural unless the context indicates otherwise.

The term "organic" as in "organic phase", "organic product", "organic extract", "organic solvent", "organic component", "organic retentate" and "organic impurities" refers to phases, products, extracts, solvents, components, retentates, and impurities comprising one or more organic compounds, where "organic compound" refers to a large class of chemical compounds whose molecules contain carbon, with the exception of carbides, carbonates, cyanides and carbon oxides. These organic compounds may include linear or cyclic aliphatic, aromatic, aralkyl compounds, and may be optionally substituted with heteroatoms.

The term "high-boiling organic compound" refers to organic compounds having boiling points greater than that of water under the same conditions, preferably greater than 110 °C under atmospheric conditions. In one embodiment of the invention, the high-boiling organic compound is an organic acid. In specific embodiments, the organic acid is an alkyl or aromatic organic carboxylic acid or sulfonic acid species such as lactic acid, acetic acid, formic acid, citric acid, oxalic acid, or uric acid.

The term "aqueous phase" refers to a mostly aqueous liquid phase having a different density than the organic phase. The density of the aqueous phase typically but not necessarily is higher than the density of the organic phase.

Numerical values in the present application relate to average values. Furthermore, unless indicated to the contrary, the numerical values should be understood to include numerical values which are the same when reduced to the same number of significant figures and numerical values that differ from the stated value by less than the experimental error of the conventional measurement technique of the type described in the present application to determine the value.

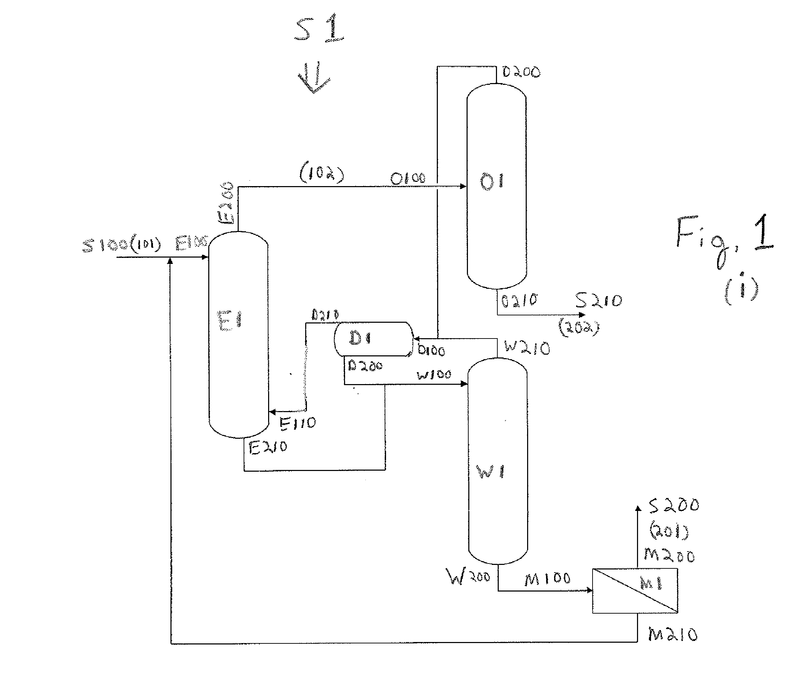

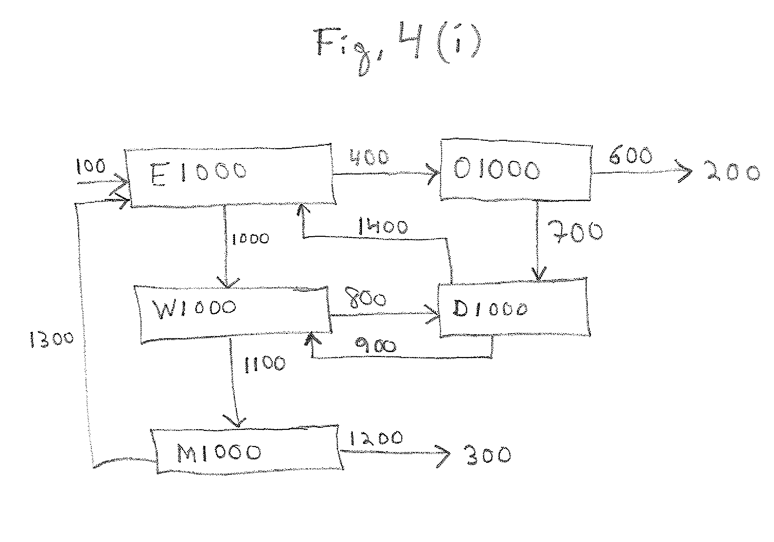

FIG. 1 shows a schematic view of an embodiment of a system 1 for water treatment comprising a membrane separation unit M1, an extraction unit E1, a decanting unit D1, an organic phase recovery unit O1, a waste water post-processing unit W1, in which an inlet of an extraction unit is in fluid communication with a system inlet, and an outlet of a waste water post-processing unit W1 is in fluid communication with an inlet of a membrane separation unit M1. In the following brief description of the units and their function and operation, a terminology for the various phases entering and leaving the units will be used that is consistent with the terminology for the various streams in the process embodiments of the invention, such as the process embodiment shown in FIG. 4.

The membrane separation unit M1 is not specifically limited so long as it is suitable for separating an aqueous-organic retentate 1300 from an aqueous permeate 1200. The membrane separation unit M1 may be a micro-, nano-, or an ultra-filtration pressure-driven membrane separation unit or a reverse osmosis membrane separation unit, as described earlier. Likewise the extraction unit E1 is not specifically limited so long as it is suitable for separating an organic extract 400 from an aqueous raffinate 1000. The extraction unit E1 may be a mixer settler, an extraction column, or a combination of said mixer-settler and said extraction column, as described earlier. The decanting unit D1 is also not specifically limited so long as it is suitable for separating an organic solvent phase 1400 from an aqueous phase 900. Thus the decanting unit D1 may be a gravity settler either with or without internals, as described earlier.

The waste water post-processing unit W1 is also not specifically limited so long as it is suitable for processing a waste water stream 1100 to remove an organic component from the waste water stream 1100 comprising predominantly an aqueous component and a minority of an organic component. Thus the waste water post-processing unit W1 may be an adsorption unit based on activated carbon, a waste water stripper, or their combination. The organic phase recovery unit O1 is also not specifically limited so long as it is suitable for recovering an organic product 200 from a second feed stream 102 comprising predominantly an organic component and a minority of an aqueous component. Thus the organic phase recovery unit O1 may be an evaporation, distillation, pervaporation, vapour permeation, or extraction unit, or their combinations. In some embodiments the organic phase recovery unit O1 may be of the same type of unit as described earlier for the waste water post-processing unit W1.

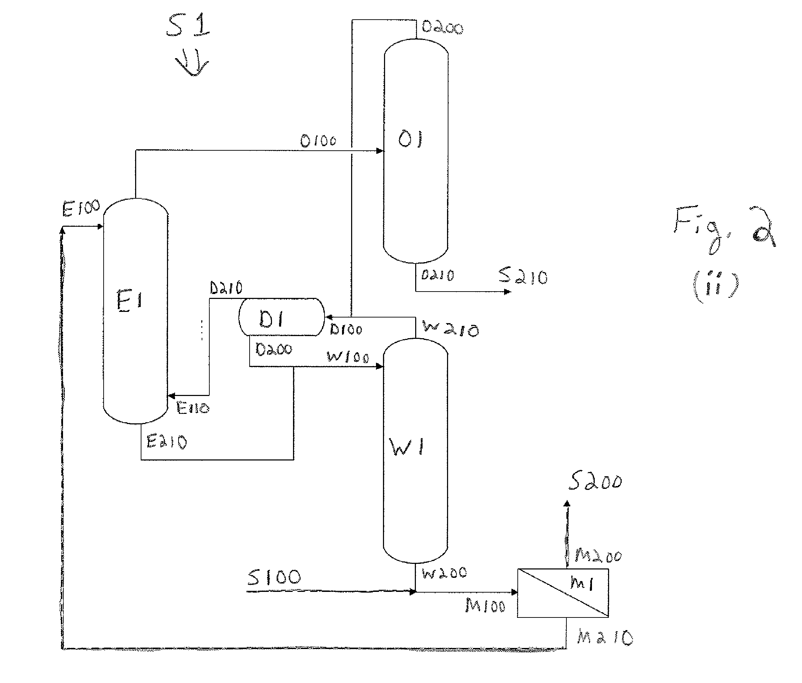

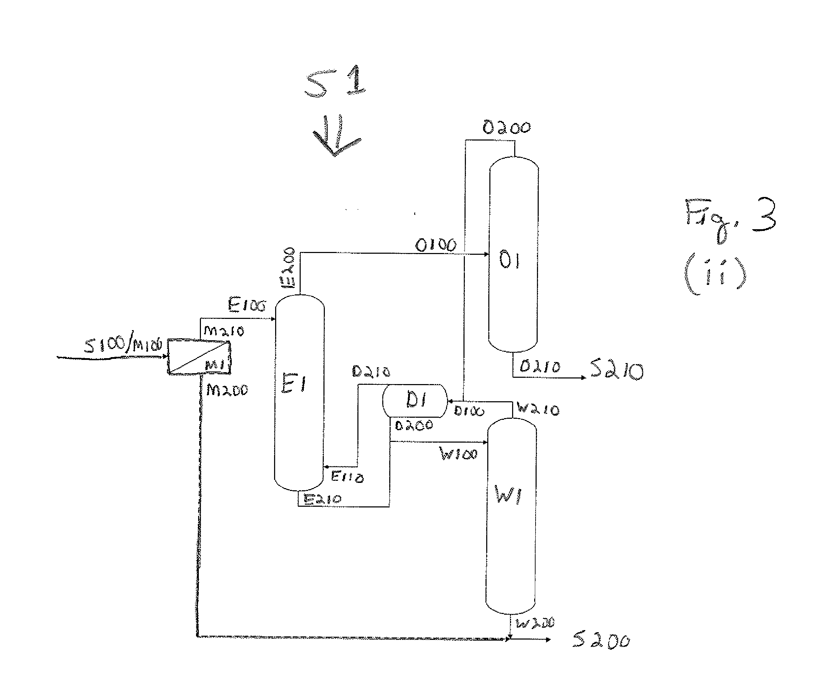

FIG. 2 shows an alternative embodiment of the system S1, in which the first inlet M100 of the membrane separation unit M1 is in fluid communication with the first system inlet S100 and the first outlet W200 of the waste water post-processing unit W1. Fig. 3 shows yet another alternative embodiment in which only M100 and S100 are in fluid communication. The embodiments as in Fig. 2 and 3 are beneficial when the organic concentration in S100 is low (e.g. below 10% in first feed stream 101) because it may then be preconcentrated in the membrane separation unit M1 before entering the extraction unit E1.

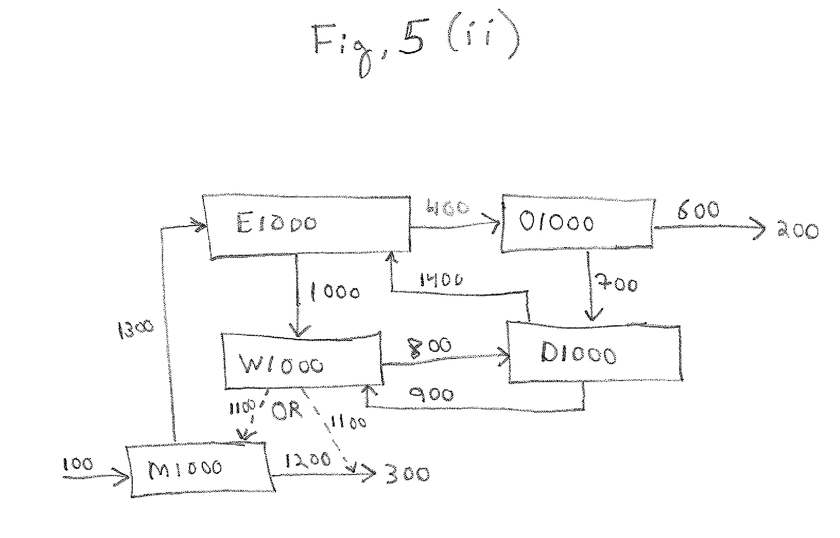

A purpose of the process of the invention is to remove an organic component out of an (aqueous) feed stream 100 and to produce a purified waste water stream 300 as well as a recovered organic product stream 200. The process comprises a liquid-liquid-extraction step E1000, a waste water post processing step W1000, an organic phase recovery step 01000, a membrane separation step M1000 and a decanting step D1000. Process flow diagrams of embodiments of the process of the invention are shown in Fig. 4 and Fig. 5.

Fig. 4 illustrates an example process flow diagram of an embodiment of the process of the invention, and it is related to the system embodiment of Fig. 1 in that the extraction E1000 is of the feed stream 100, the organic solvent phase 1400 and the organic retentate 1300, and the membrane separation M1000 is of the waste water 1100.

The feed stream 100 comprises water, one or more organic components as well as potentially other substances. In some embodiments, it is an aqueous stream containing less than 50 wt.% preferably less than 15 wt.% of organic components (for example an organic acid). In one embodiment the feed stream 100 is fed directly into the extraction step E1000 where it is contacted with the organic phase stream 1400. In the extraction step E1000 the organic components are transferred from the aqueous feed stream 100 into the organic solvent stream 400 by means of liquid-liquid-extraction with the organic streams 1300 and 1400. In one embodiment, the organic solvent stream 400 is an organic stream containing organic solvent, extracted organic components from the feed stream in varying concentrations, and saturated with water.

The aqueous stream depleted in organic components becomes the aqueous raffinate stream 1000, which leaves the extraction step E1000 and is fed into the waste water post processing W1000. The mass transfer in the extraction step E1000 between the aqueous and the organic phases also leads to an aqueous phase saturated with the volatile organic solvent phase, the aqueous raffinate 1000. To remove this residual solvent contamination out of the water, the waste water post processing step W1000 is necessary. Possible unit operations are distillation, rectification or stripping. By means of energy input inside the waste water post processing W1000 the residual organic is removed as a volatile component 800 which is fed into the decanting step D1000 and thus leaves the waste water 1100 which is further treated in the membrane separation step M1000.

The extraction step E1000 can be operated at different ratios of aqueous feed stream 100 and organic solvent stream 1400. For an economic operation of the extraction step 1000, the flow rate of the organic solvent phase 1400 should be as low as feasible. By reducing the flow rate of this stream, the residual concentration of organic components in the aqueous raffinate 1000 increases. Because the organic component will not be removed in the waste water post processing W1000, it will stay in the waste water 1100. To further purify the waste water 1100 a membrane separation step M1000 is embodied in the process.

The organic solvent phase 1400 enriched in organic components becomes the organic extract stream 400, leaves the extraction step E1000 and is fed into the organic phase recovery step 01000. Here it will be separated by means of, for example, distillation, rectification or single / multi-stage evaporation into the recovered organic product stream 200 and an organic-aqueous phase byproduct 700. The recovered organic product 200 is an organic stream in one embodiment containing > 90 wt.%, preferably > 95 wt% of recovered organic components, and < 10 wt.%, preferably < 5 wt.% of organic solvent and water. The organic-aqueous phase byproduct 700 in one embodiment is mainly an organic stream containing organic solvent phase and water in different composition and < 5 %, preferably < 1% of recovered organic product.

The organic-aqueous phase byproduct stream 700 is fed together with the volatile component stream 800 into the decanting step D1000. Both streams 700 and 800 contain water and volatile organic solvent phase in various concentrations, which are partly immiscible and will be separated into a aqueous phase 900 and a (light) organic solvent phase 1400. The composition of the aqueous phase 900 is similar to the aqueous raffinate stream 1000 and thus is treated together with this stream in the waste water post processing W1000. The (light) organic solvent stream 1400 will be recycled into the extraction step E1000 for re-use in the process.

The membrane separation step M1000 produces two outlet streams. The residual organic impurities are concentrated in the aqueous-organic retentate 1300 which is fed back into the extraction step E1000. The aqueous permeate 1200 leave the process as purified waste water 300. The purified waste water is in one embodiment an aqueous stream containing < 2 wt.%, preferably < 0.1 wt.% organic impurities.

Fig. 5 shows another embodiment of the process. The modification with respect to the above described embodiment shown in Fig. 4 is the place where the feed stream 100 enters the process. In Fig. 4 the feed stream 100 is fed directly into the extraction step E1000 while in Fig. 5 it will be blended into the waste water stream 1100 after the waste water post treatment W1000 but before the membrane separation step M1000 in one embodiment. By this set up the entire feed stream 100 will advantageously be pre-concentrated before being fed into the extraction step E1000. Fig. 5 is thus related to the system S1 of Fig. 2 and 3 in that it illustrates an example process flow diagram of an alternative embodiment in which the extraction E1000 is of the organic solvent phase 1400 and the organic retentate 1300, and the membrane separation M1000 is of the feed stream 100 and optionally the waste water 1100. As discussed earlier for the system S1, the alternative embodiments of Fig. 5 are advantageous when the organic concentration in S100 is low.

Systems for water treatment and their components (e.g. membrane separation units M1, extraction units E1, decanting units D1, organic phase recovery units O1, and waste water post-processing units W1), construction, and operation are well known in the art, for example, as disclosed in Chemical Engineering Design, Vol. 6, Coulson & Richardson's Chemical Engineering Series, by R. K. Sinnott, John Metcalfe Coulson, and John Francis Richardson, 4th Ed. Published in 2005 by Elsevier (ISBN 0 7506 6538 6), Handbook of Solvent Extraction by T.C. Lo and M. H..I. Baird, edited by C. Hanson, published in 1991 by Krieger Pub. Co. (ISBN-13: 978-0894645464), and Fundamentals and modeling of separation processes: absorption, distillation, evaporation and extraction, by C.D. Holland, published in 1975 by Prentice-Hall (ISBN 0-13-344390-6). Unless indicated otherwise, conventional construction materials and means, as well as components and auxiliaries, may be used for the system S1 and its units, and the system S1 and its units may be operated in a water treatment process in a conventional manner as known in the art. For example, auxiliaries may include electrical supplies, coolant and heating fluid supplies and distributions, level controllers, pumps, valves, pipes and lines, reservoirs, drums, tanks, and sensors for measuring such parameters as flow, temperatures, pressures and levels. The system S1 and its units and the method of the invention may be conveniently controlled by means of a computer interface equipped with appropriate sensors.

Although not shown for simplicity, one skilled in the art will understand that other conventional separation device internals may be used without limitation in the system S1 of the invention, such as feed devices like feed pipes and/or sumps, heat exchangers, support plates and grids, dispersers, disperser/support plates, continuous phase distributors, support and holddown plates, baffles, deflectors, entrainment separators, and retainers/redistributors.

The following examples are set forth to provide those of ordinary skill in the art with a detailed description of how the system S1 and processes claimed herein are evaluated, and they are not intended to limit the scope of what the inventors regard as their invention.

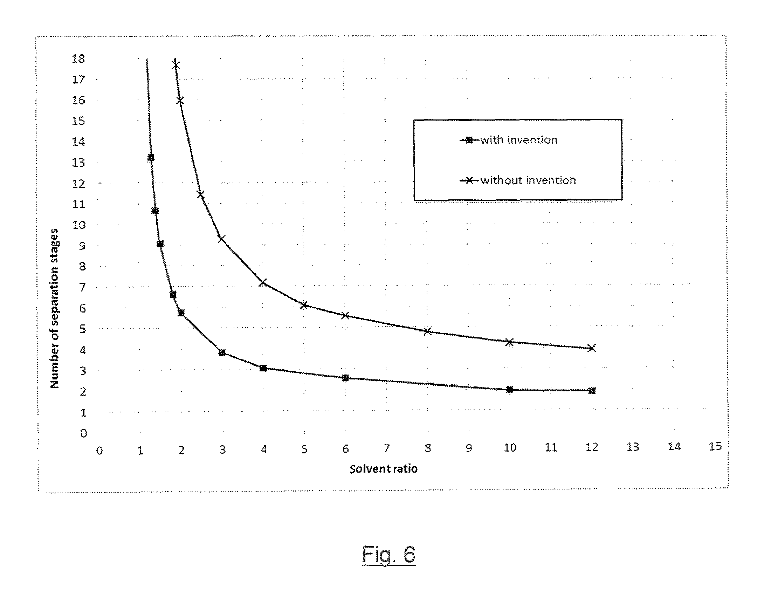

The recovery of acetic acid from a aqueous stream was carried out by an embodiment of the invention as shown in Fig 4 (i) in a working example. A comparative example was based on a conventional state of the art system not having a membrane separation unit M1, and thus the waste water stream 1100 leaving the waste water post processing W1000 was identical to the final purified waste water 300 in this comparative example. To reach the same residual acetic acid contraction in the purified waste water 300 without a system and process of the invention, a significantly high solvent ratio was found to be required in the extraction unit as shown by the line "without invention" in Fig. 6.

In a system and process of the invention [as shown in Fig. 4 (i)], the solvent ratio in the extraction unit could be significantly reduced by keeping the same number of separation stages as shown by the line "with invention" in Fig. 6. The reduced solvent ratio advantageously allows for (a) smaller equipment to be used in the organic phase recovery step O1000 and decanting step D1000 thus reducing the investment costs (CAPEX) for the system S1, and (b) a lower flow rate of organic solvent phase 1400 to the extraction step E1000, which reduces the flow rate of the organic extract stream 400 and finally reduces operating costs (OPEX).

While various embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

### Reference Symbols

### system S1

first system inlet S100
first system outlet S200
second system outlet S210
membrane separation unit M1
membrane separation unit first inlet M100
membrane separation unit first outlet M200
membrane separation unit second outlet M210 0
extraction unit E1
extraction unit first inlet E100
extraction unit second inlet E110
extraction unit first outlet E200
extraction unit second outlet E210
decanting unit D1
decanting unit first inlet D100
decanting unit first outlet D200
decanting unit second outlets D210
organic phase recovery unit O1
organic phase recovery unit first inlet O100
organic phase recovery unit first outlet 0200
organic phase recovery unit second outlet 0210
waste water post-processing unit W1
waste water post-processing unit first inlet W100
waste water post-processing unit first outlet W200
waste water post-processing unit second outlet W210

(aqueous) feed stream 100
first feed stream 101
second feed stream 102
first stream 201
second stream 202
recovered organic product 200
purified waste water 300
extraction step E1000
organic extract 400
organic phrase recovery step O1000
organic - aqueous phase byproduct 700
waste water post processing W1000
volatile component 800
aqueous phase 900
aqueous raffinate 1000
waste water stream 1100
membrane separation step M1000
an aqueous permeate 1200
aqueous-organic retentate 1300
decanting step D1000
organic solvent phase 1400

## Claims

1. A system (S1) for water treatment comprising:
- a first system inlet (S100) suitable for feeding a first feed stream (101) comprising an organic component and an aqueous component, a first system outlet (S200) suitable for discharging a first stream (201) comprising predominantly an aqueous component, and a second system outlet (S21 0) for discharging a second stream (202) comprising predominantly an organic component,
- a membrane separation unit (M1) suitable for separating an aqueous-organic retentate (1300) from an aqueous permeate (1200), having a first inlet (M100) and first and second outlets (M200, M210),
- an extraction unit (E1) suitable for separating an organic extract (400) from an aqueous raffinate (1000), having first and second inlets (E100, E110) and first and second outlets (E200, E210),
**characterized in that** the system (S1) also comprises:
- a decanting unit (D1) suitable for separating an organic solvent phase (1400) from an aqueous phase (900), having a first inlet (D100) and first and second outlets (D200, D210),
- an organic phase recovery unit (O1), suitable for recovering an organic product stream (200) from a second feed stream (102) comprising predominantly an organic component and a minority of an aqueous component, having a first inlet (O100) and first and second outlets (0200, 0210),
- a waste water post-processing unit (W1), suitable for processing a waste water stream (1100) to remove an organic component from the waste water stream (1100) comprising predominantly an aqueous component and a minority of an organic component, having a first inlet (W100) and first and second outlets (W200, W21 0),
wherein the first outlet (E200) of the extraction unit (E1) is in fluid communication with the first inlet (O100) of the organic phase recovery unit (O1), and the second outlet (E210) of the extraction unit (E1) is in fluid communication with the first inlet (W100) of the waste water post-processing unit (W1),
wherein the second outlet (0210) of the organic phase recovery unit (O1) is in fluid communication with the second outlet (S210) of the system (S1), and the first outlet (0200) of the organic phase recovery unit (O1) is in fluid communication with the first inlet (D100) of the decanting unit (D1),
wherein the second outlet (W21 0) of the waste water post-processing unit (W1) is in fluid communication with the first inlet (D100) of the decanting unit (D1),
wherein the second outlet (M210) of the membrane separation unit (M1) is in fluid communication with the first inlet (E100) of the extraction unit (E1), and the first outlet (M200) of the membrane separation unit (M1) is in fluid communication with the first system outlet (S200),
wherein the first outlet (D200) of the decanting unit (D1) is in fluid communication with the first inlet (W100) of the waste water post-processing unit (W1), the second outlet (D21 0) of the decanting unit (D1) is in fluid communication with the second inlet (E110) of the extraction unit (E1), and wherein either:
(i) the first inlet (E100) of the extraction unit (E1) is in fluid communication with the first system inlet (S100), and the first outlet (W200) of the waste water post-processing unit (W1) is in fluid communication with the first inlet (M100) of the membrane separation unit (M1), or
(ii) the first inlet (M100) of the membrane separation unit (M1) is in fluid communication with the first system inlet (S100) and optionally also the first outlet (W200) of the waste water post-processing unit (W1).

2. The system (S1) of claim 1, wherein the membrane separation unit (M1) is a micro-, nano-, or preferably an ultra-filtration pressure-driven membrane separation unit, or a reverse osmosis membrane separation unit, most preferably a reverse osmosis membrane separation unit.

3. The system (S1) of either claim 1 or 2, wherein the extraction unit (E1) is a mixer settler, preferably an extraction column, or a combination of said mixer-settler and said extraction column.

4. The system (S1) of any one of claims 1 to 3, wherein the waste water post-processing unit (W1) is an adsorption unit based on activated carbon, preferably a waste water stripper, or a combination of said adsorption unit and said waste water stripper.

5. The system (S1) of any one of claims 1 to 4, wherein the decanting unit (D1) is a gravity settler either having internals embodied so as to promote droplet-droplet coalescence and improve phase separation or preferably without said internals.

6. The system (S1) of any one of claims 1 to 5, wherein the organic phase recovery unit (O1) is an evaporation, distillation, pervaporation, vapour permeation, or extraction unit, preferably rectification unit, or their combination.

7. A process for the water treatment of a feed stream (100) comprising an organic component and an aqueous component to form a recovered organic product (200) and a purified waste water (300),
wherein the process comprises the steps of:
- extraction (E1000) to form an organic extract (400) and an aqueous raffinate (500);
- organic phrase recovery (O1000) to recover an organic product (200) from the organic extract (400) by removing an aqueous phase byproduct (700), wherein the recovered organic product (200) is discharged from the process;
- waste water post processing (W1000) to strip a volatile component (800) from an aqueous phase (900) and an aqueous raffinate (1000) and form a waste water (1100);
- membrane separation (M1000) into an aqueous-organic permeate (1200), which is discharged as a purified waste water (300), and an organic retentate (1300);
- decanting (D1000) to form an organic solvent phase (1400) and the aqueous phase (900) from the volatile component (800) and the aqueous phase byproduct (700);
wherein either:
(i) the extraction (E1000) is of the feed stream (100), the organic solvent phase (1400) and the organic retentate (1300), and the membrane separation (M1000) is of the waste water (1100), or
(ii) the extraction (E1000) is of the organic solvent phase (1400) and the organic retentate (1300), and the membrane separation (M1000) is of the feed stream (100) and optionally the waste water (1100).

8. The process of claim 7, wherein the membrane separation (M1000) is carried out by means of a membrane separation unit (M1), wherein the membrane separation unit (M1) is a micro-, nano-, or preferably an ultra-filtration pressure-driven membrane separation unit, or a reverse osmosis membrane separation unit, most preferably a reverse osmosis membrane separation unit.

9. The process of either claim 7 or 8, wherein the extraction (E1000) is carried out by means of an extraction unit (E1), wherein the extraction unit (E1) is a mixer settler, preferably an extraction column, or a combination of said mixer-settler and said extraction column.

10. The process of any one of claims 7 to 9, wherein the waste water post processing (W1000) is carried out by means of a waste water post-processing unit (W1), wherein the waste water post-processing unit (W1) is an adsorption unit based on activated carbon, preferably a waste water stripper, or a combination of said adsorption unit and said waste water stripper.

11. The process of any one of claims 7 to 10, wherein the decanting (D1000) is carried by means of a decanting unit (D1), wherein the decanting unit (D1) is a gravity settler either having internals embodied so as to promote droplet-droplet coalescence and improve phase separation or preferably without said internals.

12. The process of any one of claims 7 to 11, wherein the organic phase recovery (O1000) is carried out by means of an organic phase recovery unit (O1), wherein the organic phase recovery unit is an evaporation, distillation, pervaporation, vapour permeation, or extraction unit, preferably rectification unit, or their combination
